# EUROPÄISCHE PATENTSCHRIFT

(11) **EP 0 626 881 B1**
(45) Veröffentlichungstag und Bekanntmachung des Hinweises auf die Patenterteilung: **27.03.1996**
(21) Anmeldenummer: 93903929.3
(22) Anmeldetag: 08.02.1993
(51) Int. Cl.: B01D 61/02, B01D 61/14

(54) **VERFAHREN ZUR ABTRENNUNG ANORGANISCHER SALZE**
PROCESS FOR SEPARATING INORGANIC SALTS
PROCEDE DE SEPARATION DE SELS INORGANIQUES

(30) Priorität: 17.02.1992 DE 4204700
(43) Veröffentlichungstag der Anmeldung: 07.12.1994
(73) Patentinhaber: Henkel Kommanditgesellschaft auf Aktien, D-40191 Düsseldorf (DE)
(72) Erfinder: KÜHNE, Norbert, D-5657 Haan 1 (DE); BIERMANN, Manfred, D-4330 Mülheim (DE); JACOBS, Jochen, D-5600 Wuppertal (DE); BEHLER, Ansgar, D-4250 Bottrop (DE)
(86) Internationale Anmeldenummer: EP9300298
(87) Internationale Veröffentlichungsnummer: WO9315826

(56) Entgegenhaltungen:
- DE-A- 3 231 299
- FR-A- 2 365 609
- GB-A- 2 207 618

## Beschreibung

Die Erfindung betrifft ein Verfahren zur Abtrennung anorganischer Salze aus wäßrigen Lösungen von zur Micellbildung befähigten organischen Salzen oder Säuren und insbesondere ein Verfahren zur Herstellung salzarmer bzw. salzfreier Lösungen von anionischen, kationischen oder amphoteren Tensiden.

Bei der Herstellung anionischer, kationischer oder amphoterer Tenside, sowie Nonionics können als Nebenprodukte anorganische Salze wie Natriumchlorid oder Natriumsulfat oder dergleichen entstehen. Diese anorganischen Salze können bei einigen Spezialanwendungen stören, etwa dann, wenn jegliches korrosionsförderndes Potential der Tensidlösung strikt zu vermeiden ist, oder wenn Salze die Viskosität der Tensidlösung beeinflußen.

Die Abtrennung anorganischer Salze von organischen Säuren oder Salzen ist jedoch schwierig. Für Labor- und Technikumsmengen sind säulenchromatographische Verfahren denkbar oder es kann mit Hilfe organischer Lösungsmittel ausgefällt werden. Beide Verfahren sind sehr aufwendig und bringen nicht immer den gewünschten Erfolg.

Aus der französischen Patentanmeldung FR-A-2365609 ist die Abtrennung von anorganischen Salzen aus Zubereitungen bekannt, die Azo-Farbstoffpigmente enthalten, welche mit nichtionischen Tensiden dispergiert sind. Es wird vorgeschlagen, hierzu ein Membrantrennverfahren, z. B. die Ultrafiltration zu verwenden. Die Patentanmeldung macht jedoch keine Angaben über den Verbleib der nichtionischen Tenside, so daß der Fachmann aus dieser Schrift keine Erkenntnisse bezüglich der Reinigung von Tensiden gewinnen kann.

Aus der deutschen Patentanmeldung DE-A-32 31 299 ist ein Verfahren zur Herstellung konzentrierter wäßriger Zubereitungen von synthetischen anionischen Dispergatoren bekannt, bei dem mittels eines Umkehr-Osmoseverfahrens anorganische Salze von den anionischen, zur Micellbildung befähigten Dispergatoren abgetrennt werden. Umkehr-Osmoseverfahren arbeiten jedoch mit vergleichsweise hohem Druck (1 000 bis 10 000 kpa), so daß der Bedarf nach Verfahren mit geringerer Druckanwendung besteht.

Die Erfinder haben sich die Aufgabe gestellt, ein im technischen Maßstab durchführbares Verfahren zu schaffen, das es erlaubt, aus den Lösungen von zur Micellbildung befähigten organischen Salzen oder Säuren, anorganische Salze, aber auch andere nicht zur Micellbildung befähigte Verunreinigungen abzutrennen. Die Erfindung macht sich dabei die Erkenntnis zu Nutze, daß bei der Ultrafiltration von Lösungen, die anorganische Salze und organische Salze oder Säuren der genannten Art enthalten, die anorganischen Salze in das Permeat übertreten, wohingegen die zur Micellbildung befähigten organischen Salze oder Säuren im Retentat verbleiben. Dies ist erstaunlich, da das Molgewicht der zur Micellbildung befähigten organischen Salze oder Säuren kleiner als das Ausschlußmolgewicht der entsprechenden Membranen ist, so daß der Fachmann davon ausgehen mußte, daß hier eine Trennung nicht zu erwarten ist.

Der überraschende Trenneffekt kann wissenschaftlich nicht erklärt werden. Es wird jedoch vermutet, daß Sekundärmembranenbildung und/oder Micellbildung hier mitverantwortlich sind.

Gegenstand der Erfindung ist somit ein Verfahren zur Abtrennung anorganischer Salze aus wäßrigen Lösungen von zur Micellbildung befähigten organischen Salzen, Säuren oder nichtionischen Tensiden, bei dem man die wäßrigen Lösungen einer Ultrafiltration unterzieht und die organischen Salze, Säuren oder nichtionischen Tenside aus dem Retentat gewinnt.

In seiner breitesten Ausführungsform ist das erfindungsgemäße Verfahren auf Tensidlösungen anwendbar, in denen die Tensidkonzentration über der kritischen Micellkonzentration liegt, also auf Tensidlösungen mit einem Tensidfeststoffgehalt von mindestens 1, vorzugsweise mindestens 10 und insbesondere mindestens 20 Gew.-%. Die Obergrenze des Tensidfeststoffgehalts wird der Fachmann so wählen, daß keine viskositätsbedingten Störungen des Verfahrens eintreten. Sie kann bei 40 Gew.-%, 50 Gew.-% und in Einzelfällen bei 60 oder 80 Gew.-% liegen. Besonders bevorzugt ist es, Lösungen mit einem Feststoffgehalt von 10 bis 50 und insbesondere 20 - 40 Gew.-% zu behandeln.

Das erfindungsgemäße Verfahren eignet sich, Salze aus Tensidlösungen möglichst weitgehend zu entfernen. Darüber hinaus kann es aber auch gefragt sein, anstelle einer völligen Entfernung der Salze lediglich einen definierten Restsalzgehalt einzustellen, der unter dem Salzgehalt des Ausgangsproduktes liegt. Solche Restsalzgehalte sind dann von Interesse, wenn bei der nachfolgenden Verwendung der Tensidlösungen eine Verdickung durch Elektrolyte vorgesehen ist und zur Rezeptursicherheit Produkte mit definiertem Restsalzgehalt gewünscht werden.

Das erfindungsgemäße Verfahren eignet sich für zur Micellbildung befähigte organische Salze oder Säuren, also Aniontenside, Kationtenside und/oder Amphotenside. Darüber hinaus kann es aber auch bei nichtionischen Tensiden eingesetzt werden.

Bei den Aniontensiden sind hier in erster Linie Sulfonate und Sulfate zu nennen. Diese enthalten aus ihrer Herstellung meist Natriumsulfat als Beimischung, das unter ungünstigen Bedingungen in Form nadliger, wasserhaltiger Kristalle auskristallisieren kann. Zu nennen sind hier C₉-C₁₃-Alkylbenzolsulfonate, Olefinsulfonate, d.h. Gemische aus Alken- und Hydroxyalkansulfonaten sowie die Sulfonate, wie man sie beispielsweise aus C₁₂-C₁₈-Monoolefinen mit end- oder innenständiger Doppelbindung durch Sulfonierung mit gasförmigen Schwefeltrioxid und anschließender alkalischer oder saurer Hydrolyse der Sulfonierungsprodukte erhält. Behandelt werden können auch Alkansulfonate, die aus C₁₂-C₁₈-Alkanen, beispielsweise durch Sulfochlorierung oder Sulfoxidation mit anschließender Hydrolyse bzw. Neutralisation gewonnen werden.

Geeignet für das erfindungsgemäße Verfahren sind auch die Ester von α-Sulfofettsäuren (Estersulfonate), z. B. die α-sulfonierten Methylester der hydrierten Kokos-, Palmkern- oder Talgfettsäuren. Insbesondere kommen Ester von α-Sulfofettsäuren, die durch α-Sulfonierung der Methylester von Fettsäuren pflanzlichen und/oder tierischen Ursprungs mit 8 - 20 C-Atomen im Fettsäuremolekül und nachfolgender Neutralisation zu wasserlöslichen Monosalzen hergestellt worden sind, in Betracht. Wichtig sind hier die α-Sulfofettsäurealkylester, die eine Alkylkette mit nicht mehr als 4 C-Atomen in der Estergruppe aufweisen, beispielsweise Methylester, Ethylester, Propylester und Butylester.

Weitere geeignete Aniontenside sind die durch Esterspaltung der α-Sulfofettsäurealkylester erhältlichen α-Sulfofettsäuren bzw. ihre Di-Salze. Eingesetzt werden können natürlich auch beliebige Gemische von Estersulfonaten und den vorgenannten Di-Säuren oder Di-Salzen.

Eine weitere wichtige Klasse sind die Aniontenside vom Sulfattyp, insbesondere die Schwefelsäuremonoester aus primären Alkoholen natürlichen oder synthetischen Ursprungs. Wichtig sind hier beispielsweise Fettalkoholsulfate, z. B. aus Kokosfettalkohol, Talgfettalkohol, Oleylalkohol, Lauryl-, Myristyl-, Cetyl- oder Stearylalkohol oder den C₁₀-C₂₀-Oxoalkoholen, sowie die sekundären Alkohole dieser Kettenlänge. Auch die Schwefelsäuremonoester der mit 1 - 6 mol Ethylenoxid ethoxylierten Alkohole der vorgenannten Art, können erfindungsgemäß behandelt werden. Ebenso können sulfatierte Fettsäuremonoglyceride eingesetzt werden. Weitere Aniontenside die nach dem erfindungsgemäßen Verfahren behandelt werden können, sind Sulfobernsteinsäurehalbester, Sulfobernsteinsäurediester, Alkyletherphosphate, Alkylphenoletherphosphate, Alkylisetionate, Kondensationsprodukte von Oxi- und Amminoalkansulfonsäuren und/oder Alkyldiphenylethersulfonate.

Eine weitere Klasse von anionischen Tensiden sind carboximethylierte Oxethylate, d.h. die Umsetzungsprodukte von ethoxylierten Alkoholen mit Chloressigsäure. Genannt seien weiterhin auch die Derivate von Amminosäuren, d.h. Tenside von Sarcosittyp.

Das erfindungsgemäße Verfahren kann weiterhin zur Reinigung kationischer Tenside eingesetzt werden. Die wichtigsten kationischen Tenside sind die quartären Stickstoffverbindungen und unter diesen die Tetraalkylammoniumsalze, die N,N-Dialkylimidazoline sowie die N-Alkylpyridiniumsalze.

Das erfindungsgemäße Verfahren kann weiterhin eingesetzt werden zur Reinigung amphotärer Tenside, z. B. auf Betaintenside, die durch die Umsetzung von Trialkylaminen mit zumindest einem langkettigen Alkylrest und Chloressigsäure herstellbar sind. Weiterhin kann das Verfahren auch zur Reinigung der als Amphotenside gängigen Sulfobetaine verwendet werden.

Neben den genannten ionischen Tensiden können auch nichtionische Tenside nach dem erfindungsgemäßen Verfahren gereinigt werden. Übliche nichtionische Tenside sind die Umsetzungsprodukte langkettiger Alkohole mit Ethylenoxid oder Propylenoxid. Eine weitere wichtige Klasse von nichtionischen Tensiden sind die Alkylpolyglycoside. Bei nichtionischen Tensiden liegt das Reinigungsproblem oftmals darin, daß anorganische Beimengungen, die bei der Herstellung als Katalysatoren dienen, entfernt werden müssen. Dabei kann es von Fall zu Fall nötig sein, diese Katalysatoren durch Zugabe von Säuren oder basischen Verbindungen zunächst in eine wasserlösliche Form zu bringen.

Nach dem erfindungsgemäßen Verfahren können schließlich auch Spezialtenside gereinigt werden. Solche Spezialtenside sind z.B. perfluorierte Tenside, die entweder als Aniontenside oder als nichtionische Tenside eingesetzt werden.

Die genannten Tenside haben im allgemeinen ein Molgewicht von mindestens 100 g/mol, insbesondere 150 - 500 g/mol.

Nach einer bevorzugten Ausführungsform der Erfindung kann man die wäßrigen Lösungen einer Ultrafiltration mit Membranen einer Porenweite zwischen 0,001 und 0,01 µm bei Drucken zwischen 1 bar und 20 bar unterziehen.

Das eingesetzte Membranmaterial ist für das erfindungsgemäße Verfahren wenig kritisch und kann daher vom Fachmann frei gewählt werden. So können Membranen aus Celluloseacetat, Fluorpolymeren, Polysulfonen, Polyethersulfonen, Polyacrylaten oder Zirkondioxid eingesetzt werden. Auch Membranen aus Aluminiumoxid oder Kohlenstoffmembran sind einsetzbar.

### Beispiel:

10 kg ca. 30 %ige wäßrige Lösung eines Amphotensides (Umsetzungsprodukt von Chloressigsäurenatriumsalz mit Kokosalkyldimethylamin) mit folgender Zusammensetzung

| | |
|---|---|
| NaCl: | 6,6 % |
| Glycolsäure: | 1,93 % |
| Na-Chloracetat: | 0,37 % |
| freies Amin: | 0,17 % |
| WAS (Waschaktive Substanzen): | 29,8 % |

werden mit Wasser 1:1 verdünnt und in die Membrantrennanalyse eingesetzt. Mittels einer Pumpe wird diese Lösung bei einem Druck von 10 bar über Polysulfonmembranen mit einem Cut-off von 5000 gefördert.

Durch Entnahme von Permeat (Anfangsleistung 70 l.m⁻².h⁻¹) wird das Retentat bis auf 10 l Volumen eingedickt.

Anschließend beginnt eine Diafiltration, d.h. es wird unter Konstanthaltung des Retentatvolumens soviel Wasser zugeführt, wie Permeat entnommen wird.

Durch Messung der elektrischen Leitfähigkeit des Permeates wird der Bedarf der Diafiltration ermittelt, d.h. die Diafiltration wird beendet, wenn der gewünschte Salzgehalt erreicht ist.

Im Falle dieses Beispiels konnte nach Zuführung von 12 l Wasser die Diafiltration abgebrochen werden.

Jetzt kann zur Anhebung des WAS-Gehaltes durch ausschließliche Permeatentnahme die gewünschte Konzentration eingestellt werden.

Bei diesem Beispiel wurde auf eine Anhebung des WAS-Gehaltes verzichtet und ein Produkt folgender Zusammensetzung erhalten:

| | |
|---|---|
| NaCl: | 0,25 % |
| Glycolsäure: | 0,07 % |
| Na-Chloracetat: | 0,02 % |
| freies Amin: | 0,07 % |
| WAS: | 29,9 %. |

## Patentansprüche

1. Verfahren zur Abtrennung anorganischer Salze aus wäßrigen Lösungen von zur Micellbildung befähigten organischen Salzen, Säuren oder von nichtionischen Tensiden, bei dem man die wäßrigen Lösungen einer Ultrafiltration unterzieht und die organischen Salze oder Säuren oder die nichtionischen Tenside aus dem Retentat gewinnt.

2. Verfahren nach Anspruch 1, dadurch gekennzeichnet, daß die wäßrigen Lösungen auf einen Feststoffgehalt zwischen 1 und 80 Gew.-%, vorzugsweise 10 bis 50 und insbesondere 20 bis 40 Gew.-%, eingestellt werden können.

3. Verfahren nach einem der Ansprüche 1 oder 2, dadurch gekennzeichnet, daß man während der Ultrafiltration so lange mit Wasser dialysiert, bis sich im Retentat der vorgewählte Restsalzgehalt eingestellt hat.

4. Verfahren nach einem der Ansprüche 1 bis 3, dadurch gekennzeichnet, daß man als zur Micellbildung befähigte organische Salze oder Säuren, Aniontenside, Kationtenside und/oder Amphotenside einsetzt.

5. Verfahren nach einem der Ansprüche 1 bis 4, dadurch gekennzeichnet, daß man Aniontenside, Kationtenside, nichtionische Tenside oder Amphotenside eines Molekulargewichts von mindestens 100 g/mol, vorzugsweise 150 bis 500 g/mol, einsetzt.

6. Verfahren nach einem der Ansprüche 1 bis 5, dadurch gekennzeichnet, daß man die wäßrigen Lösungen einer Ultrafiltration mit Membranen einer Porenweite zwischen 0,001 und 0,01 µm bei Drucken zwischen 1 und 20 bar unterzieht.

7. Verfahren nach einem der Ansprüche 1 bis 6, dadurch gekennzeichnet, daß man Membranen aus Celluloseacetat, Fluorpolymeren, Polysulfonen, Polyethersulfonen, Polyacrylate oder aus Zirkondioxid, Aluminiumoxid oder Kohlenstoff einsetzt.

## Claims

1. A process for the removal of inorganic salts from aqueous solutions of organic salts, acids or nonionic surfactants capable of micelle formation, in which the aqueous solutions are subjected to ultrafiltration and the organic salts or acids or the nonionic surfactants are recovered from the retentate.

2. A process as claimed in claim 1, characterized in that the aqueous solutions can be adjusted to a solids content of 1 to 80% by weight, preferably 10 to 50% by weight and more preferably 20 to 40% by weight.

3. A process as claimed in claim 1 or 2, characterized in that the ultrafiltration is accompanied by dialysis with water until the predetermined residual salt content is established in the retentate.

4. A process as claimed in any of claims 1 to 3, characterized in that anionic surfactants, cationic surfactants and/or amphoteric surfactants are used as the organic salts or acids capable of micelle formation.

5. A process as claimed in any of claims 1 to 4, characterized in that anionic surfactants, cationic surfactants, nonionic surfactants or amphoteric surfactants with a molecular weight of at least 100 g/mole and preferably 150 to 500 g/mole are used.

6. A process as claimed in any of claims 1 to 5, characterized in that the aqueous solutions are subjected to ultrafiltration using membranes with a pore diameter of 0.001 to 0.01 µm under pressures of 1 to 20 bar.

7. A process as claimed in any of claims 1 to 6, characterized in that membranes of cellulose acetate, fluorine polymers, polysulfones, polyether sulfones, polyacrylates or of zirconium dioxide, aluminium oxide or carbon are used.

## Revendications

1. Procédé de séparation de sels inorganiques à partir de solutions aqueuses de sels, d'acides organiques ou de tensioactifs non ioniques aptes à la formation de micelles, dans lequel on soumet les solutions aqueuses à une ultrafiltration et on extrait les sels organiques, les acides organiques ou les tensioactifs non ioniques du rétentat.

2. Procédé selon la revendication 1, caractérisé en ce que la concentration en matières solides des solutions aqueuses est ajustée entre 1 et 80 % en poids, de préférence entre 10 et 50 et, en particulier, entre 20 et 40 % en poids.

3. Procédé selon une des revendications 1 ou 2, caractérisé en ce que l'on effectue une dialyse à l'eau au cours de l'ultrafiltration jusqu'à ce que la teneur résiduelle en sel prédéfinie soit atteinte dans le rétentat.

4. Procédé selon une des revendications 1 à 3, caractérisé en ce que l'on utilise comme sels ou acides aptes à la formation de micelles, des tensioactifs anioniques, cationiques et/ou amphotères.

5. Procédé selon une des revendications 1 à 4, caractérisé en ce que l'on utilise des tensioactifs anioniques, cationiques, non ioniques ou amphotères d'un poids moléculaire d'au moins 100 g/mole, de préférence compris entre 150 et 500 g/mole.

6. Procédé selon une des revendications 1 à 5, caractérisé en ce que l'on soumet les solutions aqueuses à une ultrafiltration par des membranes présentant une largeur de pore comprise entre 0,001 et 0,01 µm, à des pressions situées entre 1 et 20 bars.

7. Procédé selon une des revendications 1 à 6, caractérisé en ce que l'on utilise des membranes en acétate de cellulose, polymères fluorés, polysulfones, polyéthersulfones, polyacrylates ou en dioxyde de zirconium, oxyde d'aluminium ou carbone.
